# EUROPEAN PATENT APPLICATION

(11) **EP 3 226 159 A1**
(43) Date of publication of application: **04.10.2017**
(21) Application number: 17166760.3
(22) Date of filing: 19.03.2013
(51) Int. Cl.: G06F 17/30

(54) **SYSTEM AND METHOD FOR MANAGING BROWSING HISTORIES OF WEB BROWSER**

(30) Priority: 20.03.2012 KR 20120028119
(62) Divisional of application: 13159997.9
(71) Applicant: Samsung Electronics Co., Ltd., Gyeonggi-do 16677 (KR)
(72) Inventor: Seo, Hyungjin, 16677 Gyeonggi-do (KR)
(74) Representative: HGF Limited

(57) **Abstract**

A system and method for managing web browsing histories of a web browser are provided. The method includes receiving a request to access a web-page; analyzing link information corresponding to the requested web-page; creating a web browsing history by logging at least a part of the analyzed link information; and storing the created web browsing history.

## Description

### BACKGROUND OF THE INVENTION

### 1. Field of the Invention

This invention relates generally to web browsers, and more particularly, to a system and method for storing, when storing the web browsing history for web sites that a user has visited (accessed), the Uniform Resource Locators (URLs) and additional information, structuring the history, and providing the structured history to the user.

### 2. Description of the Related Art

With the rapid development of information and communication technology as well as semiconductor technology, the use of various types of mobile devices has also increased. Mobile devices are equipped with a number of functions such as voice calling, audio playback, text message transmission/reception, mobile broadcasting, short-range Radio Frequency (RF) communication Internet function, etc.

In particular, in order to provide Internet access functions, mobile devices include web-browsers, or mobile web-browsers. Web-browsers store records of addresses of web-sites that users have visited (i.e., accessed via the browser). The stored information regarding visited web-sites is called a history. A typical example of history related to web-browsers may include a URL or a list of URLs. Mobile devices may provide a web browsing history sorted by dates, hours, alphabetical order, frequency, etc. As such, since conventional mobile devices store only URLs in a list as a web browsing history, if a user does not recall a URL of a specific web site that the user has previously visited, the user may have difficulty re-visiting the site based upon conventional history data. In particular, if a user visited a web site via a linked URL from another web-page visited by a user within the browser, the user, who did not manually input the linked URL, will have difficulty re-visiting the same web-site corresponding to the linked URL, since mobile devices do not store URLs of web-sites linked to web-pages that users access (visit).

### SUMMARY OF THE INVENTION

The invention has been made in view of the above problems, and to provide at least the advantages described below. Accordingly, an aspect of the present invention provides a system and method for managing a web browsing history of a web browser in such a way to store both Uniform Resource Locators (URLs) of web sites that a user visited/accessed via the web browser and additional information regarding the visited web sites, as the web browsing history.

Aspects of the present invention further provide a system and method that can manage a web browsing history of a web browser in such a way to visualize and display the web browsing history, so that the user can easily detect his/her visited web browsing history.

Aspects of the present invention further provide a system and method that can manage a web browsing history of a web browser in such a way to allow users to search for the web browsing history.

In accordance with an embodiment of the invention, a method for managing web browsing histories of a web-browser is provided. The method includes receiving a request to access a web-page; analyzing link information corresponding to the requested web-page; creating a web browsing history by logging at least a part of the analyzed link information; and storing the created web browsing history.

In accordance with another embodiment of the invention, a system for managing web browsing histories is provided. The system includes a web browser for parsing and rendering a web page requested for access; a link analyzer for analyzing link information corresponding to the requested web page; a link logger for creating a web browsing history by logging at least a part of the analyzed link information; and a storage unit for storing the created history information.

### BRIEF DESCRIPTION OF THE DRAWINGS

The features and advantages of the invention will become more apparent from the following detailed description viewed in conjunction with the accompanying drawings, in which:
FIG. 1 is a schematic block diagram illustrating a mobile device according to an embodiment of the invention;
FIG. 2A is a flow chart illustrating a method for storing a web browsing history according to an embodiment of the invention;
FIG. 2B is a flow chart illustrating a method for displaying and searching for a web browsing history according to an embodiment of the invention;
FIGs. 3A and 3B are examples of screens generated according to a method for storing a web browsing history according to an embodiment of the invention;
FIG. 4 is a chart illustrating a method for visualizing and displaying a web browsing history, according to an embodiment of the invention; and
FIG. 5 is a chart illustrating a method for searching for a web browsing history, according to an embodiment of the invention.

### DETAILED DESCRIPTION OF EMBODIMENTS OF THE PRESENT INVENTION

Hereinafter, embodiments of the invention are described in detail with reference to the accompanying drawings. The same or similar reference numbers may be used throughout the drawings to refer to the same or similar parts. Detailed descriptions of well-known functions and structures incorporated herein may be omitted to avoid obscuring the subject matter of the invention.

In the following description, a mobile device according to embodiments of the invention refers to an electronic device equipped with a web browsing function, for example, Personal Digital Assistants (PDAs), smart phones, tablet PCs, Portable Multimedia Players (PMPs), electronic book readers, desktop computers, laptop computers, netbook computers, Ultra Mobile Personal Computers (UMPCs), etc.

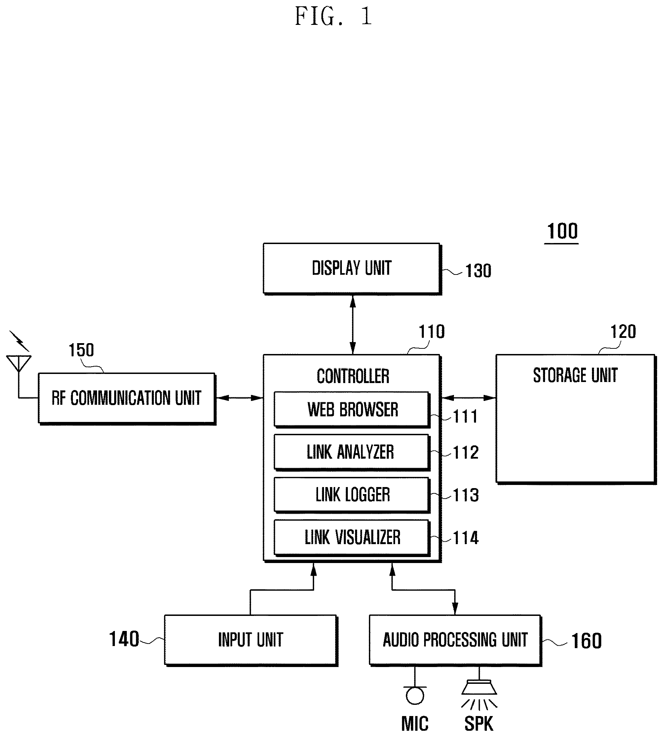

FIG. 1 illustrates a schematic block diagram of a mobile device according to an embodiment of the invention.

As shown in FIG. 1, the mobile device 100 includes an audio processing unit 160, an RF communication unit 150, an input unit 140, a display unit 130, a storage unit 120, and a controller 110. The controller 110 includes a web browser 111, a link analyzer 112, a link logger 113, and a link visualizer 114.

The audio processing unit 160 processes audio signals, through operations such as encoding, decoding, transmitting, and receiving. The audio processing unit 160 includes Coders/Decoders (CODECS), an amplifier, etc. (not shown). The audio processing unit 160 is connected to a microphone (MIC) and a speaker (SPK). The audio processing unit 160 converts analog audio signals, received via the microphone (MIC), into digital audio signals, and then transfers the digital signals to the controller 110. The audio processing unit 160 also converts digital audio signals output from the controller 110 into analog audio signals, and outputs the analog audio signals via the speaker (SPK). The audio processing unit 160 may also output audio signals to the speaker, created when Moving Picture Experts Group (MPEG) Audio Layer 3 (MP3) files or video files, for example, are reproduced.

The RF communication unit 150 establishes communication channels with a base station and performs voice and video calls, data communication, etc., via the established channels. The RF communication unit 150 includes an RF transmitter (not shown) for up-converting the frequency of signals to be transmitted and amplifying the signals and an RF receiver (not shown) for low-noise amplifying received RF signals and down-converting the frequency of the received RF signals. The RF communication unit 150 transmits a signal for sending, to a web server (not shown) a request for access to a web site, and receives the web pages therefrom. If the mobile device 100 does not provide an RF communication function, it may not include the RF communication unit 150. In that case, the mobile device 100 may request access to a web site to a corresponding web site and receive the web pages therefrom, in a wired communication mode.

The input unit 140 includes a number of input keys and function keys that receive numbers and letters and set a variety of functions in the mobile device 100. The input unit 140 creates a signal for requesting access to a web site, a signal for activating a link included in a web page, a signal for requesting the display of a web browsing history, a signal for requesting the display of a number of linked web browsing histories in a expansion or superimposition form, a signal for searching for a web browsing history, a signal for terminating access to a web site, etc., and transfers the created signals to the controller 110. The input unit 140 may include any of a button type key pad, a ball joystick, an optical joystick, a wheel key, a touch key, a touch pad, a touch screen, etc., or a combination thereof.

The display unit 130 displays menus of the mobile device 100 and information input by the user and/or information provided to the user. The display unit 130 displays various types of screens according to the operations of the mobile device 100, e.g., an idle screen (home screen), menu screens, a message writing screen, a call screen, a schedule screen, a contact list screen, a screen for displaying web pages, a web browsing history, etc. The display unit 130 include any of a Liquid Crystal Display (LCD), Organic Light Emitting Diodes (OLEDs), Active Matrix Organic Light Emitting Diodes (AMOLEDs), etc., for example. The display unit 130 may also include a touch screen, in order for the display unit 130 to also serve as an input device.

The storage unit 120 stores an Operating System (OS) of the mobile device 100. The storage unit 120 stores application programs for operating options, e.g., an audio playback function, an image/video playback function, a broadcast playback function, etc. The storage unit 120 also stores user data and/or data transmitted during communication (e.g., video files, game files, audio files, movie files, etc.), including web browsing histories. Web browsing histories include URLs of a user's visited web sites, as well as additional related information. The additional related information may include pieces of Document Object Model (DOM) node information configuring a web site, for example, letter information represented via Alt tag and/or Title tag, information representing a relationship between Parent, Sibling, Child, etc., on a DOM node structure, an image anchor, etc.

The controller 110 controls overall operations of the mobile device 100 and controls signaling between the components in the mobile device 100. The controller 110 also performs a data processing function. The controller 110 may include a Central Processing Unit (CPU), a Micro Processor Unit (MPU), an Application Processor, etc. The controller 110 performs functions corresponding to a web browser 111, a link analyzer 112, a link logger 113 and a link visualizer 114. Although, according to the present example illustrated in FIG. 1, the web browser 111, the link analyzer 112, the link logger 113 and the link visualizer 114 are separately configured, a mobile device according to embodiments of the present invention may be modified so that the web browser 111 includes the link analyzer 112, the link logger 113 and the link visualizer 114. This configuration can increase the data processing efficiency.

The controller 110 controls the web browser 111, the link analyzer 112, and the link logger 113 to store a web browsing history, according to a request for the output of web pages. The controller 110 can also control the link visualizer 114 to display a web browsing history in the structured form, according to a request for the display of web browsing history.

The web browser 111 parses and renders web pages created via web languages such as Hyper Text Markup Language (HTML), eXtensible Markup language (XML), etc. In particular, the web browser 111 provides link information regarding a web page requested for access to the link analyzer 112. The link information may be DOM node information regarding a corresponding web page.

The link analyzer 112 analyzes link information regarding a web page requested for access. The link analyzer 112 analyzes the DOM regarding the link information transferred from the web browser 111 and acquires the additional information. The link analyzer 112 can acquire part or all of a web page source from the additional information. Web pages are created with tags, e.g., <html>, <head>, <body>, <div>, etc. The link analyzer 112 collects <html> tags as a parent node to store the entire web page. Alternatively, the link analyzer 112 collects <div> tags as a parent node to store part of the web pages.

The link logger 113 generates a log from the acquired additional related information, thereby creating a web browsing history. The link logger 113 structures and stores the created web browsing history. For example, the link logger 113 structures a number of web pages, linked by the user, as one folder tree. If a user selects one of links included in a first web page, thereby to display a second web page, and then selects another link in the second web page, thereby to display a third web page, the link logger 113 concludes that the first, second, and third web pages are linked each other, and thus structures them as one folder tree. As described above, the system according to embodiments of the present invention can structure and store web browsing histories the user has visited as well as URL information.

The link visualizer 114 visualizes and displays the stored web browsing history according to a display request. The link visualizer 114 processes and displays the web browsing history including the additional information in the image form. The link visualizer 114 provides the web browsing history the link logger 113 structured in one folder tree. As described above, the system according to embodiments of the present invention can visually structure web browsing histories and display them, so that the user can easily detect his/her visited web sites (web browsing history).

When a request to search a web browsing history is made, the controller 110 outputs a search field to receive a key word. If a key word is input to the search field, the controller 110 searches for web browsing history information that includes the input key word. This search is described in further detail later herein.

Although it is not shown in FIG. 1, the mobile device 100 may selectively further include units having add-on functions, such as a Global Positioning System (GPS) module, a broadcast module for receiving and reproducing broadcasts, an audio source playback module, such as an MP3 module; a short-range RF communication module, a camera module for acquiring images or videos, etc. Other add-on units may also be included in the mobile device 100 according to embodiments of the present invention.

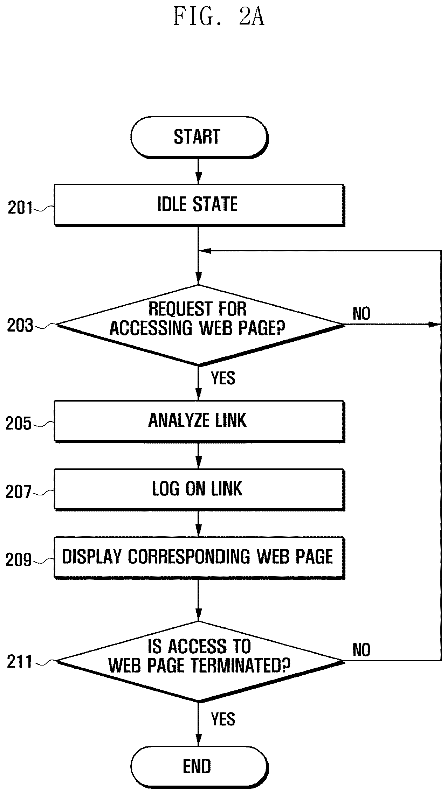

FIG. 2A is a flow chart illustrating a method for storing a web browsing history according to an embodiment of the invention.

Referring to FIGs. 1 and 2A, the mobile device 100 operates in an idle mode, in step 201. The controller 110 determines whether a request is made to access a web page (or a web site), in step 203. In order to access a web site, the user executes the web browser 111, and inputs a URL of the web site to the address field or selects a short-cut link.

If the controller 110 ascertains that a request to access a web page (or a web site) has not been made at step 203, the controller 110 continues to detect the request at step 203. However, if the controller 110 ascertains that a request to access a web page (or a web site) has been made at step 203, the controller 110 controls the link analyzer 112 to analyze a link of the web page requested for access, in step 205. To this end, the link analyzer 112 may receive the link information from the web browser 111. The link information may be DOM node information regarding the web page requested for access. After receiving the link information, the link analyzer 112 analyzes the DOM and extracts the additional information. The additional information may be letter information represented by an Alt tag or a Title tag, information indicating a relationship between Parent, Sibling, Child, etc., an image anchor, etc. The web browser 111 and the link analyzer 112 may be linked via plug-in mode or Java Extension.

After completing the link analyzing process, the controller 110 controls the logger 113 to log the analysis result, in step 207. More specifically, in step 207, the controller 110 creates a web browsing history from the URL information regarding the web page requested for access and the additional information, and then stores the created web browsing history.

Next, the controller 110 controls the display unit 130 to display the web page rendered by the web browser 111, in step 209. According to an alternative embodiment of the present invention (not shown), two or more of steps 205, 207 and 209 may be simultaneously executed.

After displaying thee rendered web page at step 209, the controller 110 determines whether a command requesting termination of access to the web page is input, in step 211. If the controller 110 determines that a command requesting termination of access to the web page has been input at step 211, the controller 110 terminates the procedure for storing the web browsing history and operates in an idle mode. However, if the controller 110 determines that a command requesting termination of access to the web page has not been input at step 211, the controller 110 returns to step 203. After returning to step 203, the controller 110 determines whether one of up to a plurality of links in the web page is selected. If the controller 110 ascertains that a link in the web page is selected, the controller 110 extracts a web browsing history regarding the linked web page selected at steps 205 and 207, and links the extracted web browsing history to the previous history, thereby structuring and storing the extracted web browsing histories as one folder tree. More specifically, if the user navigates web pages, in sequence, according to links included in the web pages, the controller 110 can structure the web browsing histories regarding a plurality of web pages as one folder tree, and store the structured web browsing histories. Therefore, a system according to embodiments of the invention allows users to easily detect their visited web sites (web pages) via the structured web browsing history.

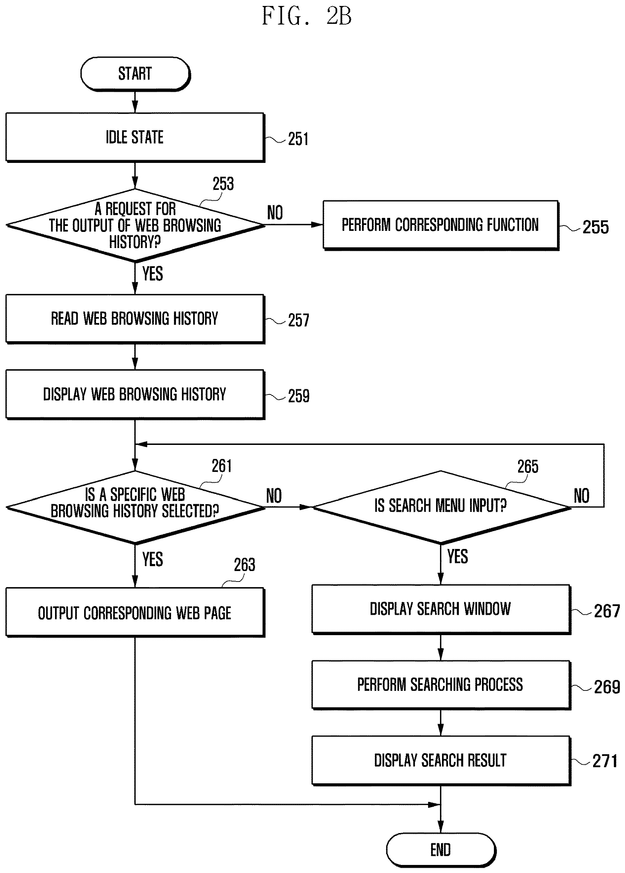

FIG. 2B is a flow chart illustrating a method for displaying and searching for a web browsing history according to an embodiment of the invention.

Referring to FIGs. 1 and 2B, the mobile device 100 operates in an idle mode, in step 251. The controller 110 determines whether a request to output a web browsing history is input, in step 253. Output of the web browsing history may be requested through input received via a history menu.

If the controller 110 determines that a request is to output a web browsing history has not been input at step 253, the controller performs a corresponding function, in step 255. For example, the controller 110 may perform an audio playback operation, a broadcast playback operation, a photographing operation, etc., according to a user request, or operate in an idle mode.

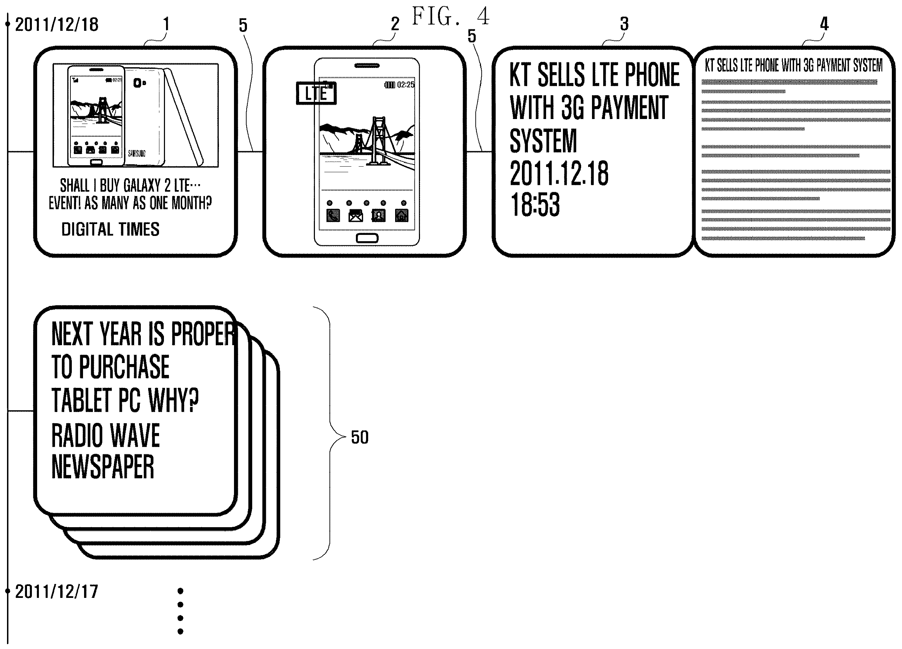

However, if the controller 110 determines that a request to output a web browsing history has been input at step 253, the controller 110 reads a web browsing history stored in the storage unit in step 257. The controller 110 processes the read web browsing history in an image form and displays the image, in step 259. More specifically, the controller 110 controls the link visualizer 114 to visualize and display according to the read web browsing history. The link visualizer 114 visualizes and displays the web browsing history structured by the link logger 113. The controller 110 may display a number of web browsing histories linked as one folder tree, in a superimposed form. If the controller 110 receives a request to expand the web browsing histories in the superimposed form, the controller 110 will expand and display the expanded web browsing histories. This expanded display is described in further detail herein with reference to FIG. 4.

After displaying the read web browsing history at step 259, the controller 110 determines whether a specific web browsing history is selected, in step 261. If the controller 110 determines that a specific web browsing history is selected at step 261, the controller 110 outputs web pages corresponding to the selected web browsing history, in step 263. Although not shown in FIG. 2B, according to another embodiment of the present invention, if the controller 110 receives a signal for returning to the previous step (e.g., a cancel key signal) while outputting the corresponding web page, the controller 110 can return to step 259 and display the web browsing history. Alternatively, if the controller 110 receives a signal for selecting a link included in the corresponding web page, the controller 110 outputs the linked web page.

However, if the controller 110 determines that a specific web browsing history has not been selected at step 261, the controller 110 determines whether a search menu is operated, in step 265. If the controller 110 determines that a search menu is not operating at step 265, the controller 110 returns to step 261. However, if the controller 110 determines that a search menu is operating at step 265, the controller 110 outputs a search field for receiving a key word, in step 267. If the user inputs a key word in the search field, the controller 110 searches for a web browsing history corresponding to the received key word, in step 269, and displays the search result, in step 271. Although not shown in FIG. 2B, according to an alternative embodiment of the present invention,, if the controller 110 receives a signal for returning to the previous step (e.g., a cancel key signal) while outputting the search result, the controller 110 can return to step 259 and display the web browsing history. Alternatively, if the controller 110 detects that a specific web browsing history is selected on the search result on the screen, the controller 110 may access a web site corresponding to the selected web browsing history and display the accessed web site. Alternatively, if the controller 110 detects a new key word inputting to the search field, the controller 110 searches for a web browsing history that includes the input key word and outputs the search result.

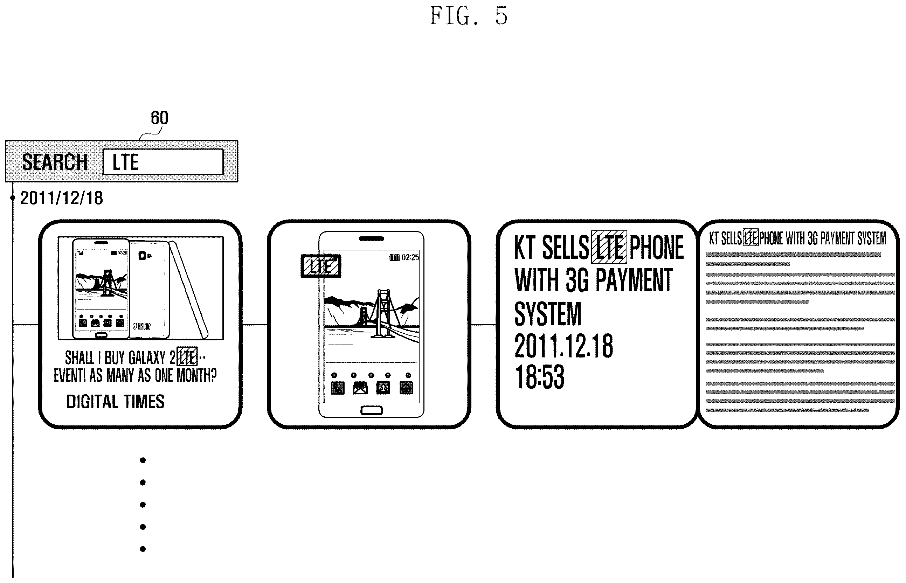

As described above, since a web browsing history according to embodiments of the present invention includes URL information, as well as additional information (in contrast with conventional systems using a web browsing history including only URL information), systems and methods according to embodiments of the present invention can search for a web browsing history with high levels of precision and reliability. Conventional systems search for a web browsing history based on URL information. However, since systems and methods according to embodiments of the present invention search for a web browsing history using the additional information (e.g., text information included in nodes, Parent, Sibling, and Child, acquired by analyzing links, such as alt tag, title tag, etc.) as well as URL information, systems and methods according to embodiments of the present invention increase the reliability and usefulness of the searched web browsing history. This search is described in further detail herein with reference to FIG. 5.

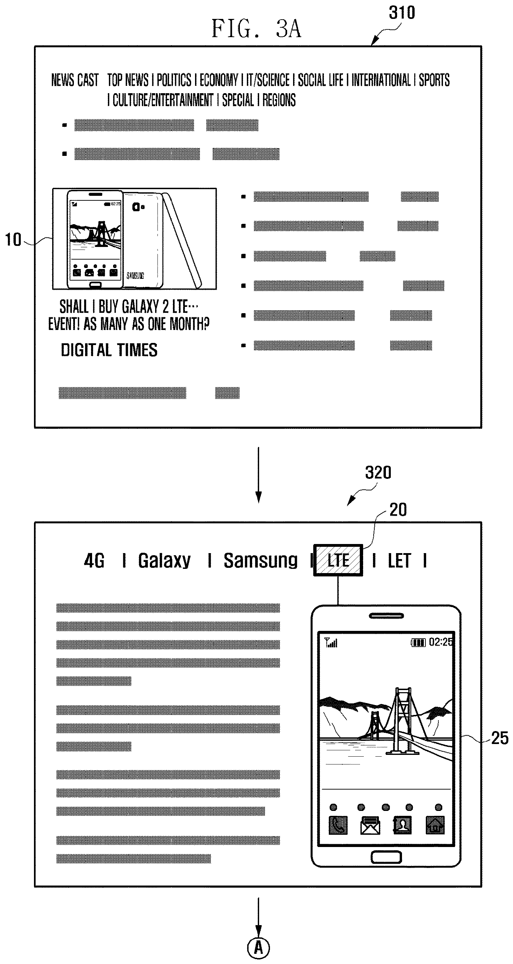

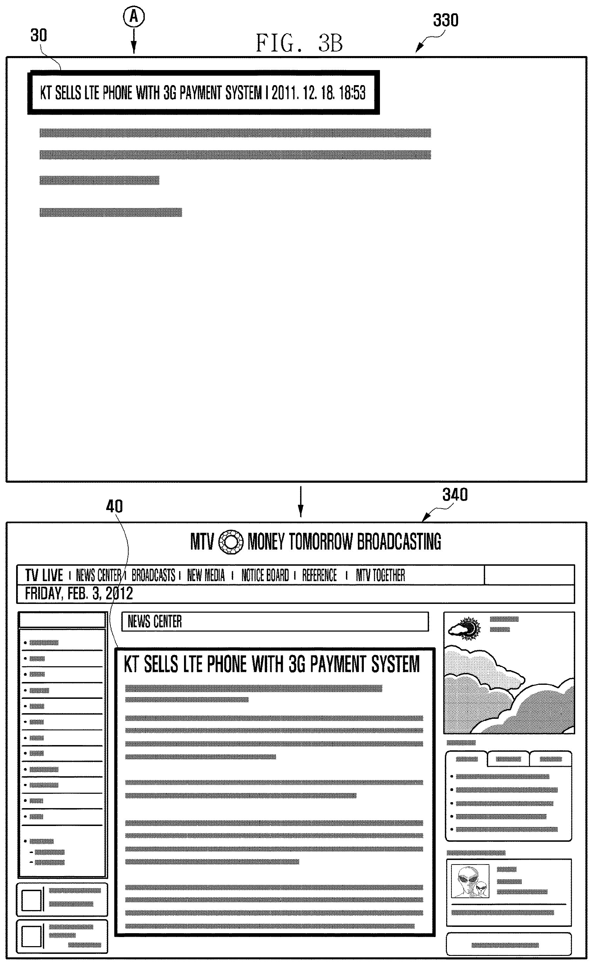

FIGs. 3A and 3B are diagrams illustrating examples of screens displayed according to a method for storing a web browsing history according to an embodiment of the invention.

Referring to FIG. 1 and FIGs. 3A and 3B, if the controller 110 receives a request to access a first web page via the web browser 111, the controller 110 controls the web browser 111 to parse and render the first web page and to display the first web page on the screen of the display unit 130, as shown in diagram 310. The first web page may be a default web page set to be displayed when the web browser 111 is executed, may be set according to a user's settings, and may include a number of links.

The user may select one of the links on the first web page to read/access. For example, in the diagram 310, the user may select (e.g., touch) a first image 10 on the first web page. Upon receiving the selection, the controller 110 controls the web browser 111 to parse and render a second web page linked to the first image 10. The web browser 111 may transfer the link information (e.g., DOM node information) regarding the first web page to the link analyzer 112. The link analyzer 112 analyzes the first web page via DOM analysis. The link analyzer 112 can extract information related to only the first image 10 from the DOM node information regarding the first web page. For example, the link analyzer 112 can extract a thumbnail image of the first image 10 and text information located at the bottom of the first image 10. The link logger 113 logs the extracted information as a web browsing history of the first web page.

After parsing and rendering the second page, the controller 110 controls the display unit 130 to display a second web page as shown in diagram 320. The user may select one (e.g., `LTE' 20) of a number of link items at the top of the second web page. If the controller 110 detects the selection of the selected link item `LTE' 20, it controls the web browser 111 to output a third web page linked to the selected link item `LTE' 20 as shown in diagram 330 of FIG. 3B. The controller 110 also controls the link analyzer 112 and the link logger 113 to store the web browsing history regarding the second web page. The web browsing history regarding the second web page may include information regarding letters included in the selected link item, as well as information regarding an image 25 included in the second web page.

If the controller 110 detects that one link 30 is selected from a number of links included in the third web page, the controller 110 controls the web browser 111 to output a fourth web page as shown in diagram 340 of FIG. 3B. The controller 110 controls the link analyzer 112 and the link logger 113 to store the web browsing history regarding the third web page. The web browsing history regarding the third web page may include information regarding letters, included in the user's selected link (e.g., 'KT sells LTE phone with 3G payment system, 2012. 12. 18, 18:53.').

If the fourth web page is displayed, the controller 110 may store the contents in the body portion of the display area 40 in the page, as additional information. As such, when a fourth web page is displayed, the controller 110 can extract an area preset in the fourth page (e.g., a body area) as additional information. After performing the extraction, if the controller 110 detects that another link is selected in the fourth web page, the controller 110 controls the link analyzer 112 and the link logger 113 to alter the information included in the selected link into a web browsing history.

FIG. 4 is a chart illustrating a method for visualizing and displaying a web browsing history, according to an embodiment of the invention.

Referring to FIGs. 1 to 4, if the controller 110 receives a request to display a web browsing history, the controller 110 controls the link visualizer 114 to visualize and display a web browsing history as shown in FIG. 4. The link visualizer 114 may display histories according to dates. The link visualizer 114 may also structure a history of web pages linked as one tree and display the structured history. For example, as shown in FIGs. 3A and 3B, the controller 110 may display a history of web pages, moved via links, as one tree. If web pages are provided from different web sites, the link visualizer 114 links a first history 1, a second history 2, and a third history 3, via a link line 5, and displays the linked histories, as shown in FIG. 4. Likewise, if web pages are provided from the same web site, the link visualizer 114 displays the third history 3 and a fourth history 4 side by side, without displaying a link line 5 between them, as shown in FIG. 4. For example, web pages corresponding to the first 1 and second 2 histories are provided web sites 'A,' and 'B,' respectively, while web pages corresponding to third 3 and fourth 4 histories are provided form web site 'C.'

The link visualizer 114 displays a number of browsing histories 50 linked as one tree, in a superimposed form. If the controller 110 detects a signal for expanding the superimposed browsing histories, the controller 110 expands and displays the expanded browsing histories. The expansion signal may be created via a function key of the input unit 140 or via a preset gesture on the touch screen (e.g., a double touch, a drag action, a flick action, a long touch, etc.). Meanwhile, if the controller 110 detects a preset signal while expanding the browsing histories, the controller 110 may superimpose and display the browsing histories.

FIG. 5 is a chart illustrating a method for searching for a web browsing history, according to an embodiment of the invention.

Referring to FIG. 5, if the controller 110 receives a request to search for a browsing history, the controller 110 displays a search field 60 that allows a user to input a key word, in an area on the screen. The user can input a key word to the search field 60 to search for a web browsing history corresponding to his/her visited web site. For example, if the user inputs a key word `LTE' to the search field 60 as shown in FIG. 5, the controller 110 searches the web browsing history (i.e., URL information and additional information) for browsing histories related to 'LTE'. After completing the search process, the controller 110 displays the found browsing histories that include the word 'LTE'. The controller 110 may also display the found browsing histories with highlighting over the word 'LTE', as shown in FIG. 5. As described above, the system and method according to the invention can store additional information as well as URL information when storing the web browsing history, so that users can search for the web browsing history with a high level of reliability.

As described above, systems and methods according to embodiments of the invention can manage web browsing history of a web browser in manner that stores the web browsing history together with URL information of web sites as well as additional information. This enables users to search for the web browsing history, based on the additional information with a high level of reliability.

In addition, systems and methods according to embodiments of the invention can structure and store the web browsing history according to the frequency of visits, and provides the structured web browsing history according to a request for the display of history. This enables users to easily recognize a list of web sites that they have visited, and to conveniently re-visit corresponding web sites.

As described above, systems and methods for managing web browsing histories according to embodiments of the present invention can be implemented with program commands that can be conducted via various types of computers and recorded in computer-readable recording media. Such computer-readable recording media contain program commands, data files, data structures, etc., or a combination thereof. The program commands recorded in the recording media may include various software including existing software or may be designed or configured to comply with embodiments of the present invention. The computer-readable recoding media includes hardware systems for storing and conducting program commands. Examples of the hardware systems are magnetic media such as a hard disk, floppy disk, a magnetic tape, optical media such as Compact Disks (CDs)-Read-Only Memory (ROM) and Digital Versatile Disks (DVDs), Magneto-Optical Media, such as floptical disks, ROM, Random Access Memory (RAM), flash memory, etc. Program commands may include assembly language or machine code complied by a complier and a higher level language interpreted by an interpreter. Hardware systems may be implemented with at least one software module to comply with embodiments of the present invention.

As described above, systems and methods for managing web browsing histories according to embodiments of the present invention have been described in detail with reference to the accompanying drawings. The terms or words described in this description and the claims should not be limited by a general or lexical meaning, instead should be analyzed as a meaning and a concept through which the inventor defines and describes the invention at his most effort, to comply with the idea of the invention. Therefore, one skilled in the art will understand that the embodiments described illustrated herein only examples of embodiments of the present invention. Accordingly, there may be various modifications, alterations, and equivalents thereof to replace the embodiments at the time of filing this application.

It should also be noted that the present disclosure can also take configurations in accordance with the following numbered clauses:
Clause 1. A method for managing web browsing histories of a web-browser comprising:
   receiving a request to access a web-page;
   analyzing link information corresponding to the requested web-page;
   creating a web browsing history by logging at least a part of the analyzed link information; and
   storing the created web browsing history.
Clause 2. The method of claim 1, wherein analyzing the link information comprises:
   extracting at least a part of Document Object Model (DOM) node information of the requested web page, as additional information.
Clause 3. The method of clause 2, wherein the additional information includes letter information indicating at least one of a title tag and an Alt tag, information indicating a relationship on a DOM node structure, and an image anchor.
Clause 4. The method of clause 1, wherein storing the created web browsing history comprises:
   structuring web browsing histories of a plurality of web pages as one tree by forming links between the structured browsing histories according to a user's selection.
Clause 5. The method of clause 1, further comprising:
   processing the web browsing history including at least part of the analyzed link information into a displayable image format.
Clause 6. The method of clause 5, wherein processing the web browsing history comprises:
   displaying the processed web browsing history structured as one tree, in one of a superimposed form and an expanded form, according to a preset input signal.
Clause 7. The method of clause 5, wherein processing the web browsing history comprises:
   linking web browsing histories of web pages provided from different web sites via a link line and displaying the linked web browsing histories; and
   displaying web browsing histories of web pages provided from a same web site without the link line.
Clause 8. The method of clause 3, further comprising:
   outputting, upon receiving a request to search for a web browsing history, a search field;
   receiving a key word via the search field; and
   searching a web browsing history included in the additional information for the key word received via the search field.
Clause 9. A system for managing web browsing histories comprising:
   a web browser for parsing and rendering a web page requested for access;
   a link analyzer for analyzing link information corresponding to the requested web page;
   a link logger for creating a web browsing history by logging at least a part of the analyzed link information; and
   a storage unit for storing the created history information.
Clause 10. The system of clause 9, wherein the link analyzer extracts at least part of Document Object Model (DOM) node information of the requested web page, as additional information,
   wherein the additional information includes letter information indicating at least one of a title tag and an Alt tag, information indicating a relationship on a DOM node structure, and an image anchor.
Clause 11. The system of clause 9, wherein the link logger structures web browsing histories of a plurality of web pages and forms links between the structured browsing histories according to a user's selection, as one tree.
Clause 12. The system of clause 9, further comprising:
   a link visualizer for processing the web browsing history including at least part of the analyzed link information into a displayable image format.
Clause 13. The system of clause 12, wherein the link visualizer displays the processed web browsing history structured as one tree, in one of a superimposed form and in an expanded form, according to a preset input signal.
Clause 14. The system of clause 12, wherein the link visualizer links web browsing histories of web pages provided from different web sites via a link line and displays the linked web browsing history, and displays web browsing histories of web pages provided from a same web site without the link line.
Clause 15. The system of clause 10, wherein the controller outputs, upon receiving a request to search for a web browsing history, a search field, receives a key word via the search field, and searches a web browsing history included in the additional information for the key word received via the search field.

## Claims

1. A method for managing web browsing histories of a web-browser comprising:
receiving a request to access a web-page;
analyzing link information corresponding to the requested web-page;
creating a web browsing history by logging at least a part of the analyzed link information;
storing the created web browsing history;
processing the web browsing history into a displayable image format, the web browsing history including the at least part of the analyzed link information;
determining whether a specific web browsing history from the web browsing history is selected;
determining whether a search menu is inputted if the specific web browsing history is not selected from the web browsing history;
displaying a search window if the search menu is inputted;
inputting a search keyword in the displayed search window; and
displaying a search result.

2. The method of claim 1, wherein analyzing the link information comprises:
extracting at least a part of Document Object Model, DOM, node information of the requested web page, as additional information.

3. The method of claim 2, wherein the additional information includes letter information indicating at least one of a title tag and an Alt tag, information indicating a relationship on a DOM node structure, and an image anchor.

4. The method of any one of claims 1 to 3, wherein storing the created web browsing history comprises:
structuring web browsing histories of a plurality of web pages as one tree by forming links between the structured browsing histories according to a user's selection.

5. The method of any preceding claim, wherein processing the web browsing history comprises:
displaying the processed web browsing history structured as one tree, in one of a superimposed form and an expanded form, according to a preset input signal.

6. The method of any preceding claim, wherein processing the web browsing history comprises:
linking web browsing histories of web pages provided from different web sites via a link line and displaying the linked web browsing histories; and
displaying web browsing histories of web pages provided from a same web site without the link line.

7. The method of any of claims 3 to 6, further comprising:
outputting, upon receiving a request to search for a web browsing history, a search field;
receiving a key word via the search field; and
searching a web browsing history included in the additional information for the key word received via the search field.

8. A system for managing web browsing histories comprising:
a web browser for parsing and rendering a web page requested for access;
a link analyzer for analyzing link information corresponding to the requested web page;
a link logger for creating a web browsing history by logging at least a part of the analyzed link information;
a storage unit for storing the created history information; and
a link visualizer for processing the web browsing history into a displayable image format, the web browsing history including the at least part of the analyzed link information,
wherein the link visualizer is configured to:
determine whether a specific web browsing history from the web browsing history is selected;
determine whether a search menu is inputted if the specific web browsing history is not selected from the web browsing history;
display a search window if the search menu is inputted;
input a search keyword in the displayed search window; and
display a search result.

9. The system of claim 8, wherein the link analyzer extracts at least part of Document Object Model, DOM, node information of the requested web page, as additional information,
wherein the additional information includes letter information indicating at least one of a title tag and an Alt tag, information indicating a relationship on a DOM node structure, and an image anchor.

10. The system of claim 8 or claim 9, wherein the link logger structures web browsing histories of a plurality of web pages and forms links between the structured browsing histories according to a user's selection, as one tree.

11. The system of any one of claims 8 to 10, wherein the link visualizer displays the processed web browsing history structured as one tree, in one of a superimposed form and in an expanded form, according to a preset input signal.

12. The system of any one of claims 8 to 11, wherein the link visualizer links web browsing histories of web pages provided from different web sites via a link line and displays the linked web browsing history, and displays web browsing histories of web pages provided from a same web site without the link line.

13. The system of any one of claims 8 to 12, wherein the controller outputs, upon receiving a request to search for a web browsing history, a search field, receives a key word via the search field, and searches a web browsing history included in the additional information for the key word received via the search field.
